# EUROPÄISCHE PATENTSCHRIFT

(11) **EP 2 690 021 B1**
(45) Veröffentlichungstag und Bekanntmachung des Hinweises auf die Patenterteilung: **24.09.2014**
(21) Anmeldenummer: 12178242.9
(22) Anmeldetag: 27.07.2012
(51) Int. Cl.: B65B 21/12, B65B 21/18, B65G 47/90

(54) **Packtulpeneinsatz zum Greifen von Flaschen oder dergleichen Flüssigkeitsbehältern, Packtulpe mit einem derartigen Packtulpeneinsatz sowie Greifvorrichtung mit einer derartigen Packtulpe und/oder einem derartigen Packtulpeneinsatz**
Packing tulip insert to grip bottles or similar liquid containers, packing tulip with such an insert and gripping device with such a packing tulip and/or such a packing tulip insert
Insert de tulipe d'emballage destiné à saisir des bouteilles ou des récipients de liquide analogues, tulipe d'emballage avec ce type d'insert de tulipe d'emballage ainsi que le dispositif de préhension doté d'une tulipe d'emballage de ce type et/ou d'un insert de tulipe d'emballage de ce type

(43) Veröffentlichungstag der Anmeldung: 29.01.2014
(73) Patentinhaber: Tyrolon-Schulnig GmbH, 6395 Hochfilzen (AT)
(72) Erfinder: Elmar Ludwig Schulnig, 6391 Fieberbrunn (AT)
(74) Vertreter: Rupprecht, Kay

(56) Entgegenhaltungen:
- WO-A1-91/11378
- DE-A1- 2 046 835
- DE-A1-102010 022 869
- DE-C1- 4 325 556

## Beschreibung

Die Erfindung betrifft einen Packtulpeneinsatz gemäß dem Oberbegriff des Patentanspruchs 1. Die Erfindung betrifft ferner eine Packtulpe mit einem derartigen Packtulpeneinsatz sowie eine Greifvorrichtung für Flaschen oder dergleichen Flüssigkeitsbehälter mit einer derartigen Packtulpe und/oder einem derartigen Packtulpeneinsatz. Ein Packtulpeneinsatz der eingangs genannten Art ist beispielsweise aus DE 20 2008 018 202 U1 bekannt.

Packtulpeneinsätze dienen im Allgemeinen zum Transport von Flaschen. Die bekannten Packtulpeneinsätze sind üblicherweise aus einem elastischen Material gebildet und weisen im Wesentlichen eine rohrförmige Gestalt auf. Die Packtulpeneinsätze können im Gebrauch einen Flaschenhals umgreifen und elastisch verformt werden, so dass eine Innenfläche des Packtulpeneinsatzes am Flaschenhals anliegt. Durch die elastische Verformbarkeit wird ermöglicht, dass sich der Packtulpeneinsatz an die Kontur des Flaschenhalses anpasst und somit eine formschlüssige Verbindung herstellt.

Der aus DE 20 2008 018 202 U1 bekannte Packtulpeneinsatz weist ferner einen Druckkolben auf, der einteilig mit dem Packtulpeneinsatz ausgebildet ist. Der Druckkolben wird im Gebrauch mit Druckluft beaufschlagt, so dass sich der Druckkolben axial bezogen auf die Längsachse des Einsatzes bewegt. Dadurch wird bewirkt, dass der Einsatz durch die axiale Druckluftbeaufschlagung verformt wird. Um sicherzustellen, dass bei der Druckluftbeaufschlagung nur der Greifteil verformt wird und der Druckkolben ausreichend stabil bleibt, weist der Druckkolben des bekannten Packtulpeneinsatzes eine relativ aufwändige Geometrie mit Rippen bzw. Vorsprüngen auf. Aufgrund von Fertigungstoleranzen besteht das Risiko, dass sich der Druckkolben bei der Druckbeaufschlagung nicht gleichmäßig nach unten senkt, sondern verdreht oder verkippt wird, was sich entsprechend auf die Verformung des Greifteils auswirkt. Dies kann zu Beschädigung der zu transportierenden Flaschen oder Flüssigkeitsbehälter führen, insbesondere wenn der Flaschenhals foliert ist. Überdies weist der Druckkolben bei dem bekannten Packtulpeneinsatz eine relativ große Bauhöhe auf. Wegen der integral mit dem Druckkolben ausgebildeten Rippen ist es auch nicht möglich, einen Auswurfmechanismus durch den Packtulpeneinsatz zu führen.

DE 2046835 beschreibt ebenfalls einen Packtulpeneinsatz gemäß dem Oberbegriff des Anspruchs 1.

Die Aufgabe der Erfindung besteht darin, einen Packtulpeneinsatz anzugeben, der kompakte Maße und eine verbesserte Formstabilität aufweist. Ferner besteht die Aufgabe der Erfindung darin, eine Packtulpe mit einem derartigen Packtulpeneinsatz und eine Greifvorrichtung für Flaschen oder dergleichen Flüssigkeitsbehälter mit einer derartigen Packtulpe und/oder einem derartigen Packtulpeneinsatz anzugeben.

Erfindungsgemäß wird diese Aufgabe im Hinblick auf den Packtulpeneinsatz durch den Gegenstand des Patentanspruchs 1, im Hinblick auf die Packtulpe durch den Gegenstand des Patentanspruchs 6 und im Hinblick auf die Greifvorrichtung durch den Gegenstand des Patentanspruchs 10 gelöst.

So beruht die Erfindung auf dem Gedanken, einen Packtulpeneinsatz zum Greifen von Flaschen oder dergleichen Flüssigkeitsbehältern mit einem elastisch verformbaren, im Wesentlichen rohrförmigen Greifteil und einem Druckkolben anzugeben, der einteilig mit dem Greifteil ausgebildet ist. Der Druckkolben weist ein formstabiles Versteifungselement auf, das fest mit dem Druckkolben verbunden ist.

Erfingungsgemäß ist das Versteifungselement in einer Ringnut gehalten, die sich über einen Innenumfang des Greifteils erstreckt.

Bei dem Packtulpeneinsatz ist also ein zusätzliches Element, nämlich das Versteifungselement, vorgesehen, das in sich formstabil ist. Das Versteifungselement und der Druckkolben bilden getrennte Bauteile des Packtulpeneinsatzes. Durch die feste Verbindung des Versteifungselements mit dem Druckkolben wird erreicht, dass auch der Druckkolben im Gebrauch seine Form beibehält. Insbesondere wird mit dem Versteifungselement erreicht, dass der Druckkolben im Wesentlichen unabhängig von der Höhe des Gasdrucks, mit der Druckkolben beaufschlagt wird, seine Form beibehält, also gleichmäßig Axialkräfte auf den Greifteil überträgt. Damit ist sichergestellt, dass sich die Innenwand des Greifteils gleichmäßig an einen Flaschenhals anlegt bzw. der Flaschenhals im Greifteil zentriert wird. Dies schont die zu greifenden Flaschen.

Die gleichmäßige Kraftübertragung von Druckkolben auf den Greifteil wird dadurch gefördert, dass, wie es in einer bevorzugten Variante der Erfindung vorgesehen ist, sich das Versteifungselement im Wesentlichen senkrecht zu einer Längsachse des Greifteils erstreckt. So ist sichergestellt, dass die Kraft, die durch den einseitig auf den Druckkolben wirkenden Überdruck auf den Druckkolben einwirkt, axial in den Greifteil übertragen wird. Die axiale bzw. exakt axiale Einwirkung der Druckkolbenkraft auf den Greifteil führt zu einer kontrollierten und gleichmäßigen radialen Komprimierung des elastischen Greifteils.

Das Versteifungselement und der Greifteil bzw. der Druckkolben können unterschiedliche Materialien aufweisen. Der Greifteil und der Druckkolben können beispielsweise aus einem elastischen Material, insbesondere einem Kunststoff, gebildet sein. Das Versteifungselement umfasst vorzugsweise ein Metall, beispielsweise Aluminium. Grundsätzlich kann vorgesehen sein, dass das Versteifungselement ein Material aufweist, das steifer, d.h. deutlich weniger elastisch, als das Material des Greifteils ist. Durch geeignete Materialwahl kann die Wandstärke im Bereich des Druckkolbens weiter reduziert werden, so dass ein Packtulpeneinsatz mit kompakten Abmessungen realisierbar ist.

Der Ringnut stellt eine besonders einfache und in der Produktion leicht umsetzbare Möglichkeit dar, das Versteifungselement fest mit dem Druckkolben zu verbinden. Grundsätzlich sind andere Verbindungen zwischen Druckkolben und Versteifungselement möglich. Beispielsweise kann das Versteifungselement vollständig vom Material des Druckkolbens umschlossen sein und/oder bei der Herstellung in das Material des Druckkolbens eingegossen werden. Das Versteifungselement kann auch mit dem Druckkolben verklebt sein. Vorzugsweise ist das Versteifungselement als Platte oder Ring ausgebildet. Sowohl die Platte, als auch der Ring weisen üblicherweise eine Dicke bzw. Stärke auf, die deutlich kleiner als der Durchmesser bzw. die Breite der Platte oder des Rings ist. Damit trägt das Versteifungselement durch seine eigenen Dimensionen zur Kompaktheit des Packtulpeneinsatzes bei. Überdies ermöglicht die Platte eine vollflächige Kraftübertragung vom Druckkolben auf den Greifteil, die von der Höhe und Verteilung des Druckes, der auf den Druckkolben einwirkt, im Wesentlichen unabhängig ist.

Die Ausbildung des Versteifungselements als Ring hat Vorteile, wenn der Druckkolben mit einer Durchgangsöffnung versehen ist. So sieht eine bevorzugte Ausführungsform der Erfindung vor, dass der Druckkolben eine Durchgangsöffnung zur Aufnahme eines Auswurfmechanismus aufweist. Je nach zu transportierenden Flüssigkeitsbehältern kann es zweckmäßig sein, eine besondere Auswurfvorrichtung in einer Packtulpe vorzusehen, um das Lösen eines leeren Flüssigkeitsbehälters vom Packtulpeneinsatz zu unterstützen. Die im Druckkolben angeordnete Durchgangsöffnung ermöglicht die Anordnung des Auswurfmechanismus derart, dass dieser im Wesentlichen axial auf den zu transportierenden Flüssigkeitsbehälter einwirken kann. Das Versteifungselement kann in diesem Fall als Ring um die Durchgangsöffnung angeordnet sein. Damit ist nicht ausgeschlossen, dass das Versteifungselement auch als Ring ausgebildet ist, wenn der Druckkolben vollflächig geschlossen ist, insbesondere keine Durchgangsöffnung aufweist.

Gemäß einem nebengeordneten Aspekt beruht die Erfindung auf dem Gedanken, eine Packtulpe für eine Greifvorrichtung für Flaschen oder dergleichen Flüssigkeitsbehälter mit einem zuvor beschriebenen Packtulpeneinsatz anzugeben. Die Packtulpe umfasst ferner ein Packtulpengehäuse, das eine Aufnahmeöffnung für den zu greifenden Flüssigkeitsbehälter aufweist. Der Packtulpeneinsatz ist in der Aufnahmeöffnung angeordnet.

Die im Zusammenhang mit dem Packtulpeneinsatz genannten bevorzugten Weiterbildungen und Vorteile geltend entsprechend für die erfindungsgemäße Packtulpe.

In einer bevorzugten Variante der Packtulpe ist vorgesehen, dass das Packtulpengehäuse ein im Wesentlichen zylinderförmiges Unterteil aufweist, das an einem unteren Ende einen radial nach Innen vorstehenden Kragen umfasst. Der Packtulpeneinsatz kann sich auf dem Kragen abstützen. Vorzugsweise ist der Packtulpeneinsatz zumindest teilweise im zylinderförmigen Unterteil des Packtulpengehäuses angeordnet. Der am unteren Ende des Unterteils angeordnete Kragen bildet ein Widerlager für den Packtulpeneinsatz, das der axialen Bewegung des Druckkolbens entgegenwirkt. Konkret verhindert der Kragen, dass der Packtulpeneinsatz infolge der Beaufschlagung mit einem Gasdruck aus dem Packtulpengehäuse geschoben wird. Vielmehr stützt sich der Packtulpeneinsatz auf dem Kragen ab, so dass sich der Abstand zwischen dem Druckkolben und dem Kragen verringert, wenn der Druckkolben mit einem Gasdruck beaufschlagt wird. Dies führt zu einer radialen Kompression des Greifteils des Packtulpeneinsatzes.

Der Packtulpeneinsatz stützt sich ausschließlich axial auf dem Kragen ab. Mit anderen Worten wirken auf den nach Innen gerichteten Kragen des Packtulpengehäuses ausschließlich axiale Kräfte.

Das Packtulpengehäuse kann ferner ein Oberteil aufweisen, das mit dem Unterteil verbindbar ist. Das Oberteil kann einen Druckraum begrenzen, der oberhalb des Packtulpeneinsatz angeordnet ist. Grundsätzlich kann das Packtulpengehäuse also zweiteilig ausgeführt sein. Dies ermöglicht einen einfachen Zusammenbau der Packtulpe. Der im Oberteil ausgebildete Druckraum stellt sicher, dass sich das über eine Einlassöffnung einströmende Gas zunächst gleichmäßig verteilt, um dann vollflächig auf den Druckkolben einzuwirken. Der Druckraum bildet somit im Wesentlichen einen Puffer, der eine gleichmäßige Druckbeaufschlagung auf den Druckkolben gewährleistet.

Vorzugsweise ist im Druckraum ein Auswurfmechanismus angeordnet, der sich zumindest teilweise durch eine Durchgangsöffnung im Druckkolben des Packtulpeneinsatzes erstreckt. Der Auswurfmechanismus kann mit dem Packtulpeneinsatz, insbesondere dem Druckkolben, verbunden sein. Konkret kann der Auswurfmechanismus mehrere Bauteile umfassen, die miteinander gekoppelt sind, konkret beweglich miteinander gekoppelt sind. Beispielsweise kann ein Auswurfstößel vorgesehen sein, der federnd mit einem Kolbenaufsatz des Auswurfmechanismus verbunden ist. Der Kolbenaufsatz ist fest mit dem Druckkolben gekoppelt. Dies bewirkt, dass eis Gasdruck, der im Druckraum aufgebaut wird, über den Kolbenaufsatz auf den Druckkolben übertragen wird. Somit wird der Greifteil des Packtulpeneinsatzes komprimiert, um einen Flaschenhals zu greifen. Der in die Aufnahmeöffnung eingeführte Flüssigkeitsbehälter drückt dabei den federnd mit dem Kolbenaufsatz verbundenen Stößel nach oben. Sobald der Druck im Druckraum nachlässt, wird die radiale Komprimierung des Greifteils aufgelöst, wodurch die Federkraft einer Feder, die zwischen Stößel und Kolbenaufsatz angeordnet ist, wirksam wird. Der Stößel wird so nach unten gedrängt, insbesondere gegen den Kopf des Flüssigkeitsbehälters. Auf diese Weise wird der Flüssigkeitsbehälter aus der Aufnahmeöffnung geschoben. Die Anordnung des Auswurfmechanismus im Druckraum ermöglicht eine kompakte Gestaltung einer Packtulpe mit integriertem Auswurfmechanismus.

Ein weiterer nebengeordneter Aspekt der Erfindung beruht auf dem Gedanken, eine Greifvorrichtung für Flaschen oder dergleichen Flüssigkeitsbehälter anzugeben, die eine Packtulpe und/oder einen Packtulpeneinsatz der zuvor beschriebenen Art aufweist.

Die Erfindung wird im Folgenden anhand von Ausführungsbeispielen unter Bezugnahme auf die beigefügten schematischen Zeichnungen näher erläutert. Darin zeigen:
- Fig. 1:: eine Längsschnittansicht des erfindungsgemäßen Packtulpeneinsatzes nach einem bevorzugten Ausführungsbeispiel;
- Fig. 2:: eine Querschnittsansicht des Packtulpeneinsatzes gemäß Fig. 1 entlang der Line A-A;
- Fig. 3.: eine perspektivische Schnittansicht des Packtulpeneinsatzes gemäß Fig. 1;
- Fig. 4:: eine Längsschnittansicht einer erfindungsgemäßen Packtulpe nach einem bevorzugten Ausführungsbeispiel;
- Fig. 5:: eine perspektivische Schnittansicht der Packtulpe gemäß Fig. 4;
- Fig. 6:: eine Längsschnittansicht einer erfindungsgemäßen Packtulpe nach einem weiteren bevorzugten Ausführungsbeispiel, wobei die Packtulpe einen Auswurfmechanismus umfasst; und
- Fig. 7:: eine perspektivische Schnittansicht der Packtulpe gemäß Fig. 6.

Der Packtulpeneinsatz 10 dient zum Greifen von Flaschen, insbesondere Flaschenhälsen bzw. Flaschenköpfen. Dazu weist der Packtulpeneinsatz 10 einen Greifteil 11 auf, der im Wesentlichen rohrförmig gestaltet ist. Ferner weist der Packtulpeneinsatz 10 einen Druckkolben 12 auf, der einteilig mit dem Greifteil 11 ausgebildet ist. Der Druckkolben 12 und der Greifteil 11 sind aus demselben Material gebildet. Vorzugsweise sind Druckkolben 12 und Greifteil 11 aus einem Kunststoff gefertigt.

Der Druckkolben 12 begrenzt den Greifteil 11. Der Druckkolben 12 kann im Wesentlichen einen deckelartigen Abschluss des Greifteils 11 bilden. Der gesamte Packtulpeneinsatz 10 weist so eine kappen- bzw. buchsenartige Gestalt auf. Der Greifteil 11 und der Druckkolben 12 begrenzen einen Aufnahmeraum 16, der zur Aufnahme von Flaschenhälsen geeignet ist. Der Greifteil 11 ist elastisch verformbar, um einen im Aufnahmeraum 16 angeordneten Flaschenhals zu greifen.

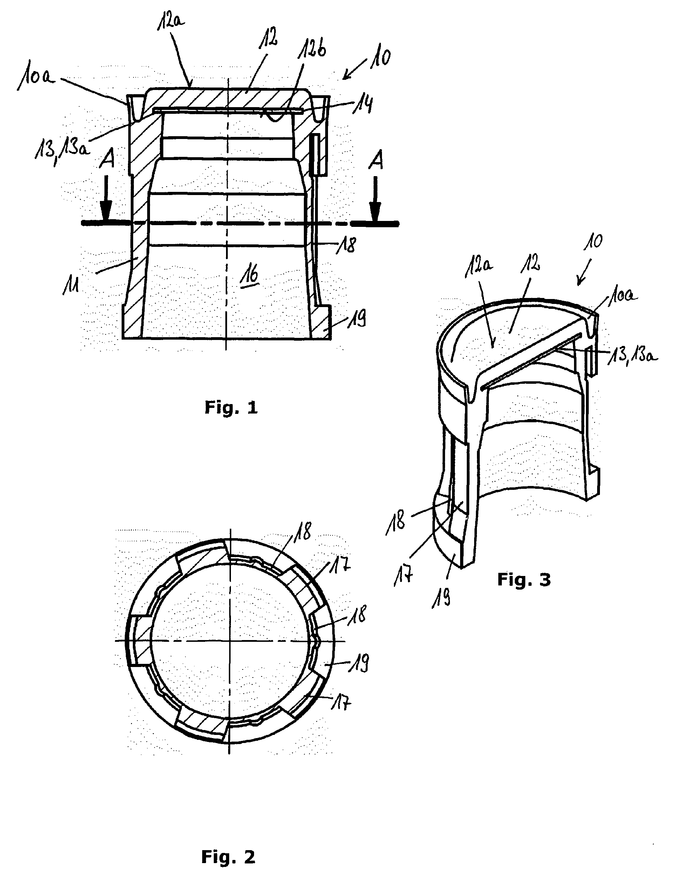

Der Greifteil 11 weist über den Umfang verteilt Bereiche mit unterschiedlichen Wandstärken auf. Dies ist aus Fig. 2 gut erkennbar. Insbesondere sind über den Umfang verteilte Verstärkungsrippen 17 vorgesehen, die sich in Längsrichtung des Greifteils 11, d.h. parallel zur Längsachse des Greifteils 11, erstrecken. Zwischen den Verstärkungsrippen 17 sind Verformungsbereiche 18 angeordnet. Die Verformungsbereiche 18 sind durch Bereiche mit verringerter Wandstärke gebildet.

Am unteren Ende des Greifteils 11, insbesondere dem Druckkolben 12 gegenüberliegend, weist der Packtulpeneinsatz 10 einen Stützrand 19 auf. Der Stützrand 19 hat eine Wandstärke, die größer als die Wandstärke der Verformungsbereiche 18, insbesondere größer als die Wandstärke der Verstärkungsrippen 17, ist. Der Stützrand 19 erstreckt sich ringförmig über den Außenumfang des Greifteils 11. Vorzugsweise weist der Stützrand 19 über den gesamten Umfang des Greifteils 11 eine einheitliche Querschnittsdimension auf. Der Stützrand 19 kann über den gesamten Umfang des Greifteils 11 ein rechteckiges Querschnittsprofil aufweisen. Der Stützrand 19 ist insofern als kontinuierlich um den Außenumfang des Greifteils 11 laufende Schulter bzw. Flansch ausgebildet.

Der Druckkolben 12 ist am oberen Ende des Greifteils 11 angeordnet und erstreckt sich im Wesentlichen senkrecht zur Längsachse des Greifteils 11. Der Druckkolben 12 weist eine Außenfläche 12a auf, die einem Druckraum 27 zugewandt ist, wenn der Packtulpeneinsatz 10 in einer Packtulpe 1 angeordnet ist. Ferner weist der Druckkolben 12 eine Innenfläche 12b auf, die dem Aufnahmeraum 16 zugewandt ist. An der Innenfläche 12b ist ein Versteifungselement 13 angeordnet.

Der Packtulpeneinsatz 10 gemäß Figuren 1-3 umfasst ein Versteifungselement 13, das mit dem Druckkolben 12 fest verbunden ist. Wie Fig. 1 zeigt, ist das Versteifungselement 13 insbesondere in einer Ringnut 14 angeordnet, die sich unmittelbar unterhalb des Druckkolbens 12 radial über den Innenumfangs des Greifteils 11 erstreckt. Das Versteifungselement 13 liegt direkt an der Innenfläche 12b des Druckkolbens 12 an und ist in der Ringnut 14 klemmfixiert. Es ist zusätzlich oder alternativ möglich, das Versteifungselement 13 mit dem Druckkolben 12 zu verkleben.

Das Versteifungselement 13 ist bei dem Ausführungsbeispiel gemäß Figuren 1-3 als Platte 13a ausgebildet. Die Platte 13a weist eine kreisförmige Kontur auf und erstreckt sich über die gesamte Innenfläche 12b des Druckkolbens 12. Die Platte 13a weist ein Material auf, das steifer als das Material des Greifteils 11 bzw. Druckkolbens 12 ist. Insbesondere kann die Platte 13a aus einem Metall gefertigt sein. Bevorzugt ist die Verwendung von Aluminium zur Herstellung der Platte 13a.

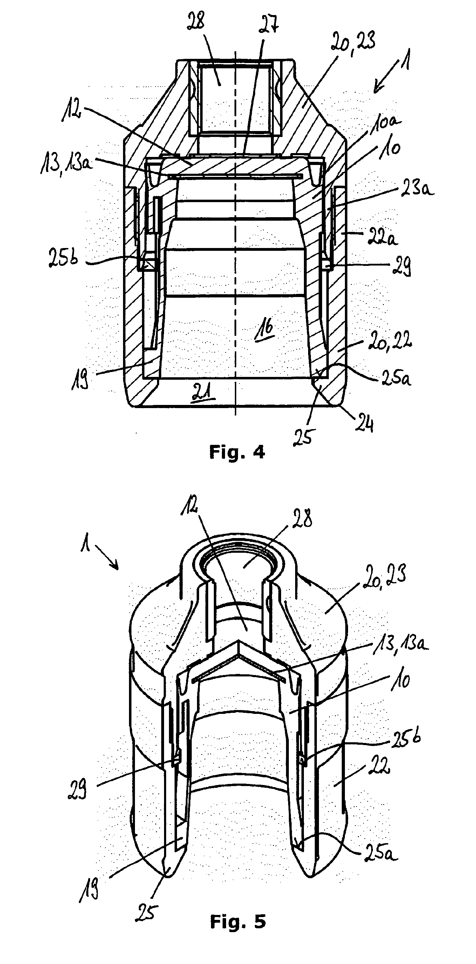

Die Figuren 4 und 5 zeigen den Packtulpeneinsatz 10 innerhalb einer Packtulpe 1. Die Packtulpe 1 weist ein Packtulpengehäuse 20 mit einem Unterteil 22 und einem Oberteil 23 auf. Das Unterteil 22 und das Oberteil 23 umschließen eine Aufnahmeöffnung 21, die den Packtulpeneinsatz 10 aufnimmt.

Das Unterteil 22 weist ein unteres Ende 24 auf, an dem ein nach Innen ragender Kragen 25 ausgebildet ist. Der Kragen 25 erstreckt sich über den gesamten Innenumfang des Unterteils 22. Der Kragen 25 weist eine Stützfläche 25a auf, die sich senkrecht zur Innenfläche des Unterteils 22 erstreckt. Insbesondere erstreckt sich die Stützfläche 25 radial in Richtung der Längsachse des Unterteils 22. Die umlaufende Stützfläche 25a bildet ein Widerlager für den Packtulpeneinsatz 10. Auf der Stützfläche 25a liegt der Stützrand 19 auf. Insbesondere besteht zwischen dem Stützrand 19 und der Stützfläche 25a ein vollflächiger Kontakt, insbesondere über den gesamten Innenumfang des Unterteils 22.

Das Oberteil 23 ist lösbar mit dem Unterteil 22 verbunden, vorzugsweise über eine Schraubverbindung. Dazu ist vorgesehen, dass das Unterteil 22 ein Innengewinde und das Oberteil 23 ein Außengewinde aufweist. Durch die zweiteilige Ausbildung des Packtulpengehäuses 20 kann der Packtulpeneinsatz 10 einfach eingesetzt werden. Der Packtulpeneinsatz 10 kann von oben in das Unterteil 22 eingeführt werden bis der Stützrand 19 auf dem Kragen 25 aufliegt. Anschließend kann das Oberteil 23 mit dem Unterteil 22 verbunden werden.

Das Oberteil 23 umfasst einen Gaseinlass 28 und begrenzt einen Druckraum 27. Der Gaseinlass ist mit dem Druckraum 27 fluidverbunden. Der Druckraum 27 wird ferner durch den Packtulpeneinsatz 10 begrenzt, insbesondere den Druckkolben 12. Konkret bildet die Außenfläche 12a des Druckkolbens 12 zumindest teilweise eine untere Begrenzung des Druckraums 27. Im Bereich des Druckkolbens 12 weist der Packtulpeneinsatz 10 überdies eine Dichtlippe 10a auf, die sich um den Außenumfang des Packtulpeneinsatzes 10 erstreckt und gegen das Oberteil 23 abdichtet. So ist sichergestellt, dass in den Druckraum 27 einströmendes Gas nicht entweicht.

In Fig. 4 ist gut erkennbar, dass der Druckraum 27 bei der erfindungsgemäßen Packtulpe 1 vergleichsweise klein gestaltet ist. Dies ist möglich, da der Druckkolben 12 durch das Versteifungselement 13 versteift ist. Das Versteifungselement 13 bewirkt, dass der Druckkolben 12 bei Druckbeaufschlagung formstabil bleibt, selbst wenn die Druckverteilung im Druckraum 27 ungleichmäßig ist. Zusätzlich ist erkennbar, dass der Druckkolben 12 insgesamt eine relativ niedrige Bauhöhe aufweist. Dies ist ebenfalls dadurch möglich, dass ein Versteifungselement 13, hier in Form der Platte 13a, vorgesehen ist, das die Formstabilität des Druckkolbens 12 sicherstellt. Insgesamt führen diese Maßnahmen dazu, dass die Packtulpe 1 kompakt gestaltet werden kann.

Der Gaseinlass 28 weist ein Innengewinde auf, das beispielsweise als Gewindehülse in das Oberteil 23 eingepresst sein kann. Dadurch ist der Gasauslass 28 mit einer entsprechenden Gaszufuhr verbindbar.

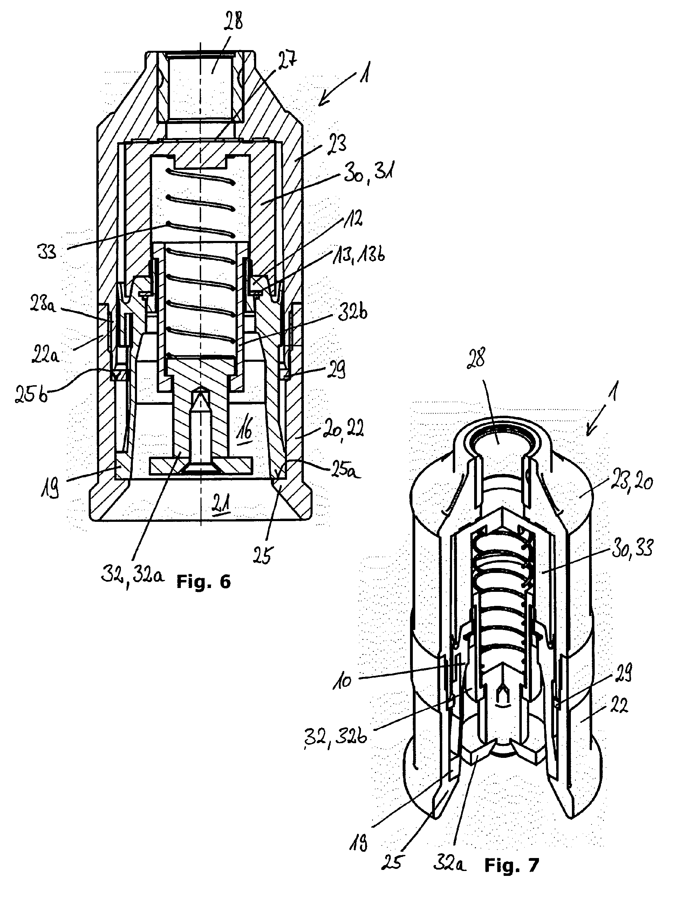

In den Figuren 6 und 7 ist eine weitere Variante der erfindungsgemäßen Packtulpe 1 und des Packtulpeneinsatzes 10 dargestellt. Der Aufbau des Packtulpeneinsatzes 10 entspricht im Wesentlichen der Gestaltung des Packtulpeneinsatzes 10 gemäß Figuren 1-5. Abweichend davon ist vorgesehen, dass der Druckkolben 12 eine Durchgangsöffnung 15 aufweist, durch die sich ein Auswurfmechanismus erstreckt. Der Auswurfmechanismus 30 ist im Druckraum 27 des Packtulpengehäuses 20 angeordnet. Das Oberteil 23 des Packtulpengehäuses 20 weist daher eine größere Bauhöhe auf als bei dem Ausführungsbeispiel gemäß Figuren 4 und 5.

Der Auswurfmechanismus 30 umfasst einen Kolbenaufsatz 31 und einen Auswurfstößel 32. Der Auswurfstößel 32 ist zweiteilig ausgebildet. Konkret umfasst der Auswurfstößel 32 einen Stempel 32a, der teleskopartig in einem Teleskoprohr 32b geführt ist. Durch das Teleskoprohr 32b erstreckt sich eine Feder 33, insbesondere eine Spiraldruckfeder. Die Feder stützt sich einerseits an einer Oberseite des Kolbenaufsatzes 31 und andererseits am Stempel 32a ab. Die Federkraft bewirkt, dass der Stempel 32a nach unten in Richtung des Kragens 25 des Packtulpengehäuses 20 gedrängt wird. Durch den zweiteiligen Aufbau des Auswurfstößels 32 wird erreicht, dass der Stempel 32a vollständig in den Kolbenaufsatz 31 versenkbar ist, insbesondere den Aufnahmeraum 16 vollständig freigibt.

Bei der in den Figuren 6 und 7 dargestellten Variante der Packtulpe 1 ist das Versteifungselement 13 als Ring 13b ausgebildet. Dies trägt der Durchgangsöffnung 15 Rechnung. Mit anderen Worten ist das plattenartige Versteifungselement 13 durch die Durchgangsöffnung 15 durchbrochen, so dass ein ringförmiger Rand, der Ring 13b, bestehen bleibt.

Der Kolbenaufsatz 31 des Auswurfmechanismus 30 stützt sich einerseits an der Außenfläche 12a des Druckkolbens 12 ab. Andererseits liegt eine Oberseite des Kolbenaufsatzes 31 an dem Oberteil 23, insbesondere im Bereich des Gaseinlasses 28, an.

In beiden Varianten der Packtulpe 1, die in den Figuren 4-7 dargestellt sind, ist ferner vorgesehen, dass zwischen dem Packtulpeneinsatz 10 und dem Packtulpengehäuse 20 ein Stützkranz 29 angeordnet ist. Der Stützkranz 29 weist eine im Wesentlichen zylinderförmige Außenfläche auf, die an der Innenfläche des Packtulpengehäuses 20 anliegt. Die an sich kreisrunde Innenfläche des Stützkranzes 29 umfasst radial vorstehende Vorsprünge, die in die Verformungsbereiche 18 des Packtulpeneinsatzes 10 eingreifen. Somit wird ein Verdrehen des Stützkranzes 29 verhindert. Der Stützkranz 29 liegt auf einer Auflagefläche 25b des Unterteils 22 auf. Die Auflagefläche 25b erstreckt kreisförmig über den Innenumfang des Unterteils 22. Die Auflagefläche 25b ist dadurch gebildet, dass ein oberer Endabschnitt des Unterteils 22 einen größeren Innendurchmesser aufweist, als ein unterer Abschnitt des Unterteils 22. Das Oberteil 23 weist einen Gewindeabschnitt 23a mit einem Außenumfang auf, der im Wesentlichen dem Innenumfang des Unterteils 22 entspricht, insbesondere dem Innenumfang des oberen Endabschnitts des Unterteils 22. Der Gewindeabschnitt 23a weist eine geringere Höhe auf als der obere Endabschnitt 22a des Unterteils 22. Die Differenz zwischen der Höhe des Gewindeabschnitts 23a des Oberteils 23 und der Höhe des oberen Endabschnitts 22a des Unterteils 22 entspricht der Höhe des Stützkranzes 29. So liegt der Gewindeabschnitt 23a des Oberteils 23 auf dem Stützkranz 29 auf. Mit anderen Worten ist der Stützkranz 29 zwischen dem Gewindeabschnitt 23a des Oberteils 23 und der Auflagefläche 25b des Unterteils 22 eingespannt bzw. klemmfixiert.

Im Betrieb ermöglicht die Packtulpe 1 ein schonendes Greifen von Flaschen oder ähnlichen Flüssigkeitsbehältern. Dazu wird über den Gaseinlass 28 ein Gas, vorzugsweise Druckluft, unter Druck in den Druckraum 27 geführt, sobald im Aufnahmeraum 16 ein Flaschenhals angeordnet ist. Der Druck im Druckraum 27 führt dazu, dass der Druckkolben 12 in axialer Richtung nach unten, also in Richtung zum unteren Ende 24 des Unterteils 22, gedrängt wird. Da sich der Packtulpeneinsatz 10 auf dem Kragen 25 des Packtulpengehäuses 20 abstützt, bewirkt die axiale Bewegung des Druckkolbens 12 ein radiales Ausweichen des Greifteils 11. Dabei verformt sich der Greifteil 11, insbesondere die Verformungsbereiche 18 des Greifteils 11. Die Verformungsbereiche 18 werden radial nach Innen gedrängt und umschließen so den Flaschenhals, der im Aufnahmeraum 16 angeordnet ist. Bei der Variante gemäß Figuren 6 und 7 wird durch den Flaschenhals der Auswurfstößel 32 gegen die Federkraft der Feder 33 zurückgedrängt. Anschließend wird der Flaschenhals durch die Verformungsbereiche 18 gegriffen.

Um die Flasche wieder freizugeben, ist es bei der Variante gemäß Figuren 4 und 5 lediglich erforderlich, den Druck vom Druckkolben 12 zu nehmen, so dass sich der Greifteil 11 aufgrund seiner elastischen Eigenschaften in den Ursprungszustand, wie er in Fig. 4 dargestellt ist, zurückstellt. Der Flaschenhals wird somit freigegeben, wobei sich die Verformungsbereiche 18 vom Flaschenhals entfernen. Dieser Effekt wirkt auch bei dem Ausführungsbeispiel gemäß Figuren 6 und 7. Gleichzeitig wirkt die Federkraft der Feder 23 axial auf den im Aufnahmeraum 16 angeordneten Flaschenhals bzw. Flaschenkopf. Damit wird der Flüssigkeitsbehälter bzw. die Flasche zusätzlich aktiv axial aus dem Aufnahmeraum 16 geschoben.

### Bezugszeichenliste

- 1: Packtulpe
- 10: Packtulpeneinsatz
- 10a: Dichtlippe
- 11: Greifteil
- 12: Druckkolben
- 12a: Außenfläche
- 12b: Innenfläche
- 13: Versteifungselement
- 13a: Platte
- 13b: Ring
- 14: Ringnut
- 15: Durchgangsöffnung
- 16: Aufnahmeraum
- 17: Verstärkungsrippe
- 18: Verformungsbereich
- 19: Stützrand
- 20: Packtulpengehäuse
- 21: Aufnahmeöffnung
- 22: Unterteil
- 22a: Oberer Endabschnitt
- 23: Oberteil
- 23a: Gewindeabschnitt
- 24: Unteres Ende
- 25: Kragen
- 25a: Stützfläche
- 25b: Auflagefläche
- 26: Oberes Ende
- 27: Druckraum
- 28: Gaseinlass
- 29: Stützkranz
- 30: Auswurfmechanismus
- 31: Kolbenaufsatz
- 32: Auswurfstößel
- 32a: Stempel
- 32b: Teleskoprohr
- 33: Feder

## Patentansprüche

1. Packtulpeneinsatz (10) zum Greifen von Flaschen oder dergleichen Flüssig keitsbehälter mit einem elastisch verformbaren, im Wesentlichen rohrförmigen Greifteil (11) und einem Druckkolben (12), der einteilig mit dem Greifteil (11) ausgebildet ist, wobei der Druckkolben (12) ein formstabites Versteifungselement (13) aufweist, das fest mit dem Druckkolben (12) verbunden ist,
**dadurch gekennzeichnet, dass**
das Versteifungselement (13) in einer radialen Ringnut (14) gehalten ist, die sich über einen Innenumfang des Greifteils (11) erstreckt.

2. Packtulpeneinsatz (10) nach Anspruch
**dadurch gekennzeichnet, dass**
sich das Versteifungselement (13) im Wesentlichen senkrecht zu einer Längsachse des Greifteils (11) erstreckt.

3. Packtulpeneinsatz (10) nach Anspruch 1 oder 2,
**dadurch gekennzeichnet, dass**
das Versteifungselement (13) und der Druckkolben (12) unterschiedliche Materialien aufweisen.

4. Packtulpeneinsatz (10) nach einem der vorhergehenden Ansprüche,
**dadurch gekennzeichnet, dass**
das Versteifungselement (13) als Platte (13a) oder Ring (13b) ausgebildet ist.

5. Packtulpeneinsatz (10) nach einem der vorhergehenden Ansprüche,
**dadurch gekennzeichnet, dass**
der Druckkolben (12) eine Durchgangsöffnung (15) zur Aufnahme eines Auswurfmechanismus (30) aufweist.

6. Packtulpe (1) für eine Greifvorrichtung für Flaschen oder dergleichen Flüssigkeitsbehälter mit einem Packtulpeneinsatz (10) nach einem der vorhergehenden Ansprüche und einem Packtulpengehäuse (20), das eine Aufnahmeöffnung (21) für den zu greifenden Flüssigkeitsbehälter aufweist, wobei der Packtulpeneinsatz (10) in der Aufnahmeöffnung (21) angeordnet ist.

7. Packtulpe (1) nach Anspruch 6,
**dadurch gekennzeichnet, dass**
das Packtulpengehäuse (20) ein im Wesentlichen zylinderförmiges Unterteil (22) aufweist, das an einem unteren Ende (24) einen radial nach Innen vorstehenden Kragen (25) aufweist, wobei sich der Packtulpeneinsatz (10) auf dem Kragen (25) abstützt.

8. Packtulpe (1) nach Anspruch 6 oder 7,
**dadurch gekennzeichnet, dass**
das Packtulpengehäuse (20) ein Oberteil (23) aufweist, das mit dem Unterteil (22) verbindbar ist und einen Druckraum (27) begrenzt, der oberhalb des Packtulpeneinsatzes (10) angeordnet ist.

9. Packtulpe (1) nach einem der Ansprüche 6-8,
**dadurch gekennzeichnet, dass**
im Druckraum (27) ein Auswurfmechanismus (30) angeordnet ist, der sich zumindest teilweise durch eine Durchgangsöffnung (15) im Druckkolben (12) des Packtulpeneinsatzes (10) erstreckt.

10. Greifvorrichtung für Flaschen oder dergleichen Flüssigkeitsbehälter mit einer Packtulpe (1) und/oder einem Packtulpeneinsatz (10) nach einem der vorhergehenden Ansprüche.

## Claims

1. A packing tulip insert (10) for gripping bottles or similar liquid containers having an elastically deformable, substantially tubular gripper part (11) and a pressure piston (12) integrally formed with the gripper part (11), wherein the pressure piston (12) comprises a dimensionally stable stiffening element (13) fixedly connected to the pressure piston (12),
**characterized in that**
the stiffening element (13) is held in a radial annular groove (14) spanning an inner circumference of the gripper part (11).

2. The packing tulip insert (10) according to claim 1,
**characterized in that**
the stiffening element (13) extends substantially perpendicular to a longitudinal axis of the gripper part (11).

3. The packing tulip insert (10) according to claim 1 or 2,
**characterized in that**
the stiffening element (13) and the pressure piston (12) are of different materials.

4. The packing tulip insert (10) according to any one of the preceding claims,
**characterized in that**
the stiffening element (13) is configured as a plate (13a) or a ring (13b).

5. The packing tulip insert (10) according to any one of the preceding claims,
**characterized in that**
the pressure piston (12) has a through-hole (15) for receiving an ejector mechanism (30).

6. A packing tulip (1) for a gripping device for bottles or similar liquid containers having a packing tulip insert (10) according to one of the preceding claims and a packing tulip housing (20) which has a receiving opening (21) for the liquid container to be gripped, wherein the packing tulip insert (10) is disposed in the receiving opening (21).

7. The packing tulip (1) according to claim 6,
**characterized in that**
the packing tulip housing (20) comprises a substantially cylindrical lower section (22) having a radial inward-projecting collar (25) on a lower end (24), wherein the packing tulip insert (10) is supported on the collar (25).

8. The packing tulip (1) according to claim 6 or 7,
**characterized in that**
the packing tulip housing (20) comprises an upper section (23) connectable to the lower section (22) and defining a pressure chamber (27) arranged above the packing tulip insert (10).

9. The packing tulip (1) according to any one of claims 6 to 8,
**characterized in that**
an ejector mechanism (30) is disposed in the pressure chamber (27) which extends at least partially through a through-hole (15) in the pressure piston (12) of the packing tulip insert (10).

10. A gripping device for bottles or similar liquid containers comprising a packing tulip (1) and/or a packing tulip insert (10) in accordance with one of the preceding claims.

## Revendications

1. Insert formant tulipe d'emballage (10) pour saisir des bouteilles ou des récipients à liquide analogues, comprenant une partie de préhension (11) élastiquement déformable et essentiellement en forme de tube et un piston de compression (12) qui est réalisé d'une seule pièce avec la partie de préhension (11), dans lequel le piston de compression (12) comprend un élément de rigidification à forme stable (13), qui est relié fermement avec le piston de compression (12),
**caractérisé en ce que** l'élément de rigidification (13) est retenu dans une gorge annulaire radiale (14) qui s'étend sur une périphérie intérieure de la partie de préhension (11).

2. Insert formant tulipe d'emballage (10) selon la revendication 1,
**caractérisé en ce que** l'élément de rigidification (13) s'étend sensiblement perpendiculairement à un axe longitudinal de la partie de préhension (11).

3. Insert formant tulipe d'emballage (10) selon la revendication 1 ou 2,
**caractérisé en ce que** l'élément de rigidification (13) et le piston de compression (12) comportent des matériaux différents.

4. Insert formant tulipe d'emballage (10) selon l'une des revendications précédentes,
**caractérisé en ce que** l'élément de rigidification (13) est réalisé sous forme de plaque (13a) ou d'anneau (13b).

5. Insert formant tulipe d'emballage (10) selon l'une des revendications précédentes,
**caractérisé en ce que** le piston de compression (12) comporte une ouverture traversante (15) pour la réception d'un mécanisme d'éjection (30).

6. Tulipe d'emballage (1) pour un dispositif de préhension destiné à des bouteilles ou à des récipients à liquide analogues, comprenant un insert formant tulipe d'emballage (10) selon l'une des revendications précédentes, et un boîtier de tulipe d'emballage (20), qui comporte une ouverture de réception (21) pour le récipient à liquide à saisir, dans laquelle l'insert formant tulipe d'emballage (10) est agencé dans l'ouverture de réception (21).

7. Tulipe d'emballage (1) selon la revendication 6,
**caractérisée en ce que** le boîtier de tulipe d'emballage (20) comprend une partie inférieure (22) sensiblement en forme de cylindre, qui comporte une collerette (25) dépassant radialement vers l'intérieur à une extrémité inférieure (24), et l'insert formant tulipe d'emballage (10) est soutenu sur la collerette (25).

8. Tulipe d'emballage (1) selon la revendication 6 ou 7,
**caractérisée en ce que** le boîtier de tulipe d'emballage (20) comprend une partie supérieure (23), qui est susceptible d'être reliée à la partie inférieure (22) et qui délimite une chambre à pression (27), laquelle est agencée au-dessus de l'insert formant tulipe d'emballage (10).

9. Tulipe d'emballage (1) selon l'une des revendications 6 à 8,
**caractérisée en ce qu'**un mécanisme d'éjection (20) est agencé dans la chambre à pression (27), mécanisme qui s'étend au moins partiellement à travers une ouverture traversante (15) dans le piston de compression (12) de l'insert formant tulipe d'emballage (10).

10. Dispositif de préhension pour bouteilles ou pour récipients à liquide analogues, comprenant une tulipe d'emballage (1) et/ou un insert formant tulipe d'emballage (10) selon l'une des revendications précédentes.
